**Europäisches Patentamt**

**European Patent Office**

**Office européen des brevets**

(11) Veröffentlichungsnummer: **0 084 139**
**A2**

(12) **EUROPÄISCHE PATENTANMELDUNG**

(21) Anmeldenummer: **82111759.5**

(22) Anmeldetag: **17.12.82**

(51) Int. Cl.³: **B 65 G 53/30**
**E 02 F 7/10**

(30) Priorität: **21.12.81 DE 3150671**

(43) Veröffentlichungstag der Anmeldung:
**27.07.83 Patentblatt 83/30**

(84) Benannte Vertragsstaaten:
**AT BE CH FR GB IT LI LU NL SE**

(71) Anmelder: **HFT - Hydrofördertechnik AG**
**Hord**
**CH-9035 Grub AR(CH)**

(72) Erfinder: **Schnell, Ludwig Lorenz**
**Wacholderstrasse 5**
**D-7085 Bopfingen-Aufhausen(DE)**

(74) Vertreter: **Hoeger, Stellrecht & Partner**
**Uhlandstrasse 14c**
**D-7000 Stuttgart 1(DE)**

(54) **Vorrichtung zur Abförderung von Schüttgut.**

(57) Die Erfindung bezieht sich auf eine Vorrichtung zur Abförderung von Schüttgut in einem Förderrohr mittels eines von einer Druckquelle angelieferten Druckmediums. Um bei einer solchen Vorrichtung zu erreichen, daß Verschleiß und Leistung der Druckquelle (Pumpe) gegenüber dem bekannten Stand der Technik wesentlich abgesenkt werden können, zeichnet sich die Vorrichtung durch folgende Merkmale aus:
a) ein Sammelbehälter für das zu fördernde Schüttgut;
b) ein dem Sammelbehälter nachgeschalteter, mit dem Förderrohr verbundener Einspeisbehälter;
c) ein zwischen Sammel – und Einspeisbehälter angeordnetes Absperrventil;
d) eine in den Einspeisbehälter mündende, mit einer Druckquelle verbundene Druckleitung;
e) ein Absperrventil in der Druckleitung zwischen Druckquelle und Einspeisbehälter.

Fig. 1

Croydon Printing Company Ltd.

HOEGER, STELLRECHT & PARTNER

P A T E N T A N W A L T E
UHLANDSTRASSE 14 c · D 7000 STUTTGART 1

A 44 972 m
m - 168
17.12.1981


B e s c h r e i b u n g

Vorrichtung zur Abförderung von Schüttgut

Die Erfindung betrifft eine Vorrichtung zur Abförderung
von Schüttgut in einem Förderrohr mittels eines von einer
Druckquelle angelieferten Druckmediums.

Es ist bekannt, Schüttgut, insbesondere von einem Bagger
aus einem See oder Fluß geförderten Sand und/oder Kies
durch sogenannte "Panzerpumpen" über längere Strecken hinweg in einer Förderleitung zu befördern. Dabei durchfließt
das zu fördernde Schüttgut gemeinsam mit dem von der
Druckquelle erzeugten Druckmedium, gewöhnlich Druckwasser,
die Pumpe. Diese Pumpen unterliegen einem außerordentlich
starken Verschleiß und benötigen extrem hohe Leistungen.

Es ist Aufgabe der Erfindung, eine gattungsgemäße Vorrichtung so auszubilden, daß Verschleiß und Leistung der Druckquelle (Pumpe) gegenüber dem bekannten Stand der Technik
wesentlich abgesenkt werden können.

Die Aufgabe wird erfindungsgemäß durch folgende Merkmale
gelöst:
a) ein Sammelbehälter für das zu fördernde Schüttgut;
b) ein dem Sammelbehälter nachgeschalteter, mit dem Förderrohr verbundener Einspeisbehälter;
c) ein zwischen Sammel- und Einspeisbehälter angeordnetes Absperrventil;

d) eine in den Einspeisbehälter mündende, mit einer Druckquelle verbundene Druckleitung;

e) ein Absperrventil in der Druckleitung zwischen Druckquelle und Einspeisbehälter.

Die nachstehende Beschreibung bevorzugter Ausführungsformen dient im Zusammenhang mit beiliegender Zeichnung der weiteren Erläuterung der Erfindung. Es zeigen:

Fig. 1        eine erste Ausführungsform einer Einspeis-
              und Abfördervorrichtung für Schüttgut;

Fig. 2        eine abgewandelte Ausführung der Vorrichtung

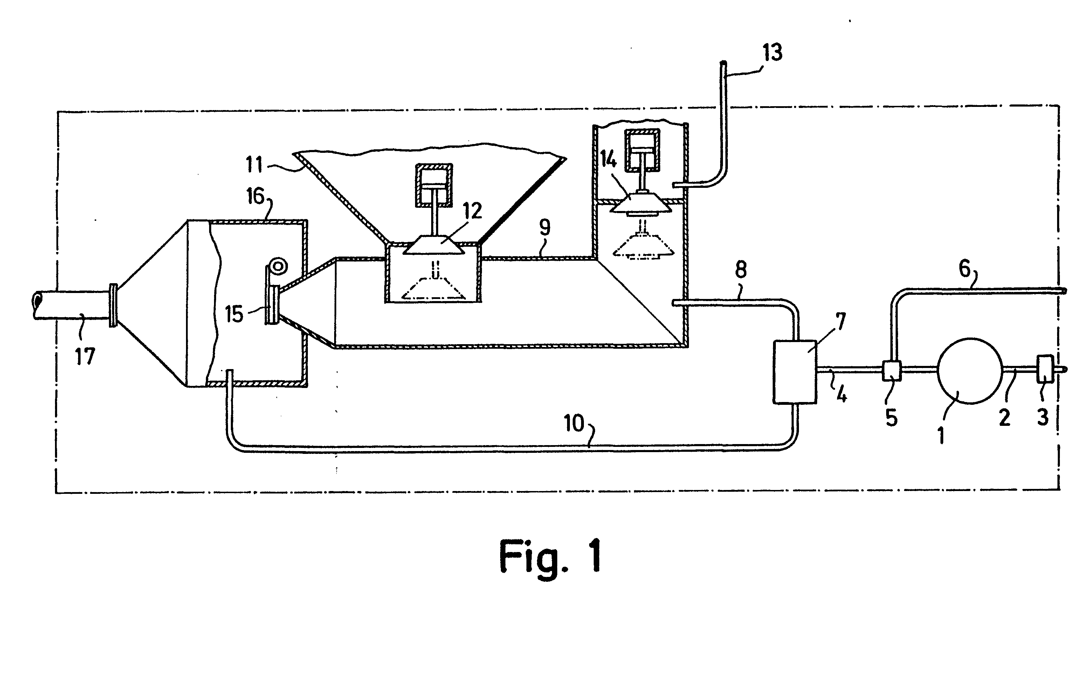

              in Fig. 1 und

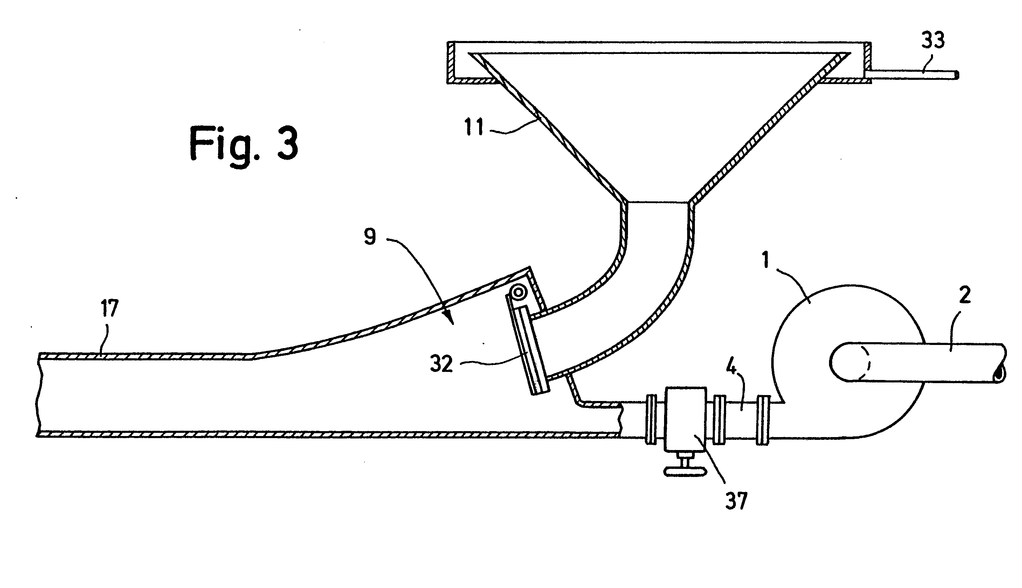

Fig. 3        eine vereinfachte Einspeis- und Abfördervorrichtung für Schüttgut.

In der (schematischen) Fig. 1 ist eine Druckwasserpumpe 1 über ihre Saugleitung 2, die einen Absperrschieber 3 enthält, mit einem Wasservorrat, beispielsweise einem Fluß oder See verbunden. In der Druckleitung 4 der Pumpe 1 befindet sich ein als Sicherheitsventil dienendes Überdruckventil 5, welches bei übermäßigem Druck die Druckleitung 4 über eine Leitung 6 wieder mit dem Wasservorrat (See oder Fluß) verbindet. Die Druckleitung 4 mündet in ein Drei-Wege-Absperrventil 7, von dem zwei Leitungen 8 und 10 ausgehen. In der einen Stellung des Drei-Wegeventils 7 ist die Druckleitung 4 mit der Leitung 8 verbunden, während die Leitung 10 abgesperrt ist. In der anderen Stellung des Ventils 7 sind die Verhältnisse umgekehrt. Die Leitung 8 mündet in einen Einspeisbehälter 9, der mit einem wannen-
oder trichterförmigen Sammelbehälter 11 für abzuförderndes
Schüttgut, nämlich aus dem See oder Fluß gebaggerten Sand
oder Kies in Verbindung steht. Zwischen dem Sammelbehälter
11 und dem Einspeisbehälter 9 ist ein Absperrventil 12
angeordnet, welches vorzugsweise motorisch und rasch von
der Schließ- in die Offenstellung und umgekehrt überführbar ist. Die Schließstellung ist in Fig. 1 mit ausgezogenen, die Offenstellung mit strichpunktierten Linien dargestellt.

Der Sammelbehälter 9 steht ferner mit einer in den See
oder Fluß zurückführenden Überlaufleitung 13 in Verbindung.
Zwischen der Überlaufleitung 13 und dem Einspeisbehälter
9 ist ein dem Ventil 12 entsprechendes Absperrventil 14
angeordnet. An seiner der Leitung 8 und dem Ventil 14 abgekehrten Seite ist der Einspeisbehälter 9 unter Zwischenschaltung einer verschwenkbar gelagerten Rückschlagklappe 15 mit einem Einlaufbehälter 16 verbunden, der seinerseits an ein Förderrohr 17 angeschlossen ist. Das Förderrohr 17 führt - gegebenenfalls über eine größere Strecke
hinweg - zu einer Abladestelle für das abzufördernde
Schüttgut. Die Leitung 10 führt von dem Drei-Wegeventil 7
in den Einlaufbehälter 16.

Die beschriebene Anordnung funktioniert folgendermaßen:
Die Pumpe 1 fördert ständig Druckwasser über die Druckleitung 4 zum Drei-Wege-Absperrventil 7 und von da, je nach
Stellung dieses Ventils, über die Leitung 8 in den Einspeisbehälter 9 oder über die Leitung 10 in den Einlaufbehälter 16. Im folgenden werde zunächst angenommen, daß
sich das Ventil 7 in einer solchen Stellung befindet, daß die Leitung 8 abgesperrt ist und das Druckwasser aus der Druckleitung 4 über die als Bypaß dienende Leitung 10 in den Einlaufbehälter 16 strömt.

In dieser Stellung des Ventils 7 sind die Absperrventile 12 und 14 geöffnet. Abzuförderndes Schüttgut, nämlich Sand, Kies o. dgl., welches vorher, beispielsweise durch einen Saug- oder Druckbagger in den Sammelbehälter 11 eingefüllt wurde, fließt zusammen mit dem vom Bagger mit angelieferten Wasser in den Einspeisbehälter 9. Das schwerere Schüttgut setzt sich am Boden des Sammelbehälters 9 ab, das Wasser kann über die Überlaufleitung 13 ablaufen. Durch das über die Leitung 10 in den Einlaufbehälter 16 einströmende Druckwasser wird die Rückschlagklappe 15 in ihrer Schließstellung gehalten.

Nachdem sich eine ausreichende Menge an Schüttgut im Einspeisbehälter 9 abgesetzt hat, werden die Absperrventile 12, 14 geschlossen und das Ventil 7 in seine andere Stellung umgeschaltet, so daß nunmehr das Druckwasser aus der Druckleitung 4 über die Leitung 8 in den Einspeisbehälter 9 strömt, während die als Bypaß dienende Leitung 10 stillgelegt ist. Das einströmende Druckwasser reißt das vorher abgesetzte Material aus dem Einspeisbehälter 9 an der sich öffnenden Rückschlagklappe 15 vorbei in den Einlaufbehälter 16 und von da über das Förderrohr 7 bis zur Ablegestelle. Nach Entleerung des Einspeisbehälters 9 von Schüttgut werden das Ventil 7 wieder umgeschaltet und die Ventile 12, 14 geöffnet, so daß sich der Einspeisbehälter 9 erneut mit Schüttgut füllen kann. Während dieser Zeit strömt das Druckwasser durch die Leitung 10 direkt in den Einlaufbehälter 16 und von da in das Förderrohr 17, wo es der weiteren Abförderung des in diesem Rohr bereits enthaltenen Schüttgutes dient.

Die beschriebene Umschaltung der Ventile 7, 12 und 14 wiederholt sich in bestimmtem Zeittakt, so daß letzten Endes eine weitgehend stetige Abförderung des Schüttgutes erfolgt.

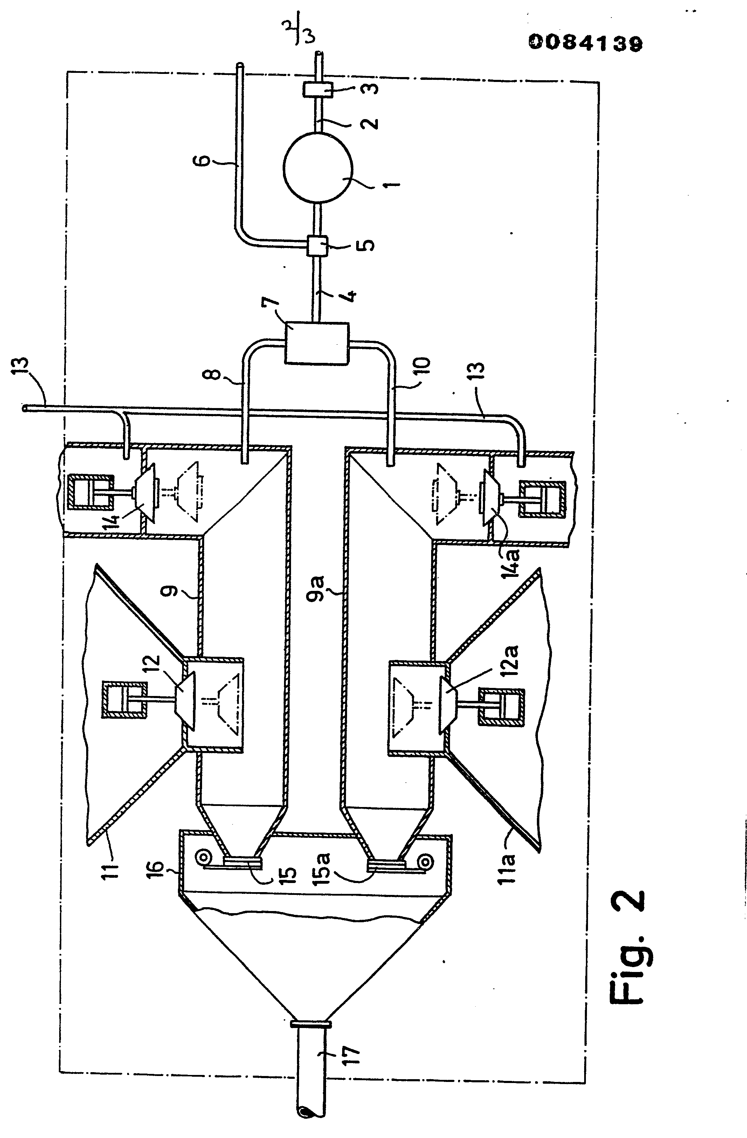

Fig. 2 zeigt eine Abwandlung der in Fig. 1 dargestellten Vorrichtung. Die Vorrichtung gemäß Fig. 2 ist gewissermaßen eine Verdoppelung der Anordnung nach Fig. 1 und dient der Erhöhung der Förderleistung. Während die in Fig. 1 dargestellte Vorrichtung als Solo-Anlage bezeichnet werden kann, ist die Vorrichtung nach Fig. 2 eine Tandem-Anlage.

In der (schematischen) Fig. 2 sind einander entsprechende Teile mit den gleichen Bezugszeichen wie in Fig. 1 versehen. In den gemeinsamen Einlaufbehälter mündet ein zusätzlicher Einspeisbehälter 9a mit Sammelbehälter 11a und Absperrventilen 12a, 14a sowie Rückschlagklappe 15a. Die letztgenannten Teile entsprechen dabei in Aufbau und Wirkungsweise den zuvor anhand von Fig. 1 beschriebenen Teilen 9, 11, 12, 14 und 15.

Die Anordnung gemäß Fig. 2 funktioniert folgendermaßen:
Das Drei-Wegeventil 7 wird in bestimmtem Zeittakt so hin- und hergeschaltet, daß die Druckleitung 4 über die Leitungen 8 oder 10 abwechselnd mit dem einen Einspeisbehälter 9 oder mit dem anderen Einspeisbehälter 9a verbunden ist. Derjenige Einspeisbehälter 9 oder 9a, der gerade kein Druckwasser empfängt, wird bei geöffneten Ventilen 12, 14 bzw. 12a, 14a mit Schüttgut gefüllt, während gleichzeitig aus dem anderen, mit der Druckleitung 4 verbundenen Einspeisbehälter das vorher eingeschleuste Schüttgut in den Einlaufbehälter 16 gespült und von dort über das Rohr 17 abgefördert wird. Die Rückschlagklappe 15 an dem jeweils
gerade mit Schüttgut beladenen Einspeisbehälter 9 wird
durch den vom Druckwasser im Einlaufbehälter 16 erzeugten
Druck in Schließstellung gehalten.

Da auf diese Weise ständig Schüttgut aus einem Einspeisbehälter 9, 9a  fließt,    während der andere Einspeisbehälter gleichzeitig mit Schüttgut gefüllt wird, ist auf
diese Weise die Förderleistung gegenüber der Vorrichtung
nach Fig. 1 erhöht.

Die Fig. 3 zeigt eine dritte Ausführungsform einer Einspeis-
und Abfördervorrichtung für Schüttgut, die gegenüber den
Ausführungsformen nach Fig. 1 und 2 einen geringeren Fertigungs- und Betriebsaufwand erfordert. In der (schematischen) Fig. 3 sind einander entsprechende Teile mit den
gleichen Bezugszeichen wie in Fig. 1 versehen. Zwischen
dem Sammelbehälter 11 und dem Einspeisbehälter 9 ist ein
als einfache Rückschlagklappe ausgebildetes Absperrventil
32 angeordnet. Der Sammelbehälter 11 ist mit einer Überlaufleitung 33 ausgerüstet. Zwischen der Druckleitung 4
der Pumpe 1 und dem Einspeisbehälter 9 ist ein einfaches
Absperrventil 37 angeordnet, welches zwischen einer Schließ-
und Offenstellung hin- und herverstellt werden kann, wobei
die Verstellung vorzugsweise motorisch und möglichst rasch
erfolgt. Zwischen Pumpe 1 und Absperrventil 37 kann ebenso wie in Fig. 1 ein Sicherheitsventil 5 mit Ablaufleitung 6 vorgesehen sein.

Die Anordnung nach Fig. 3 funktioniert in folgender Weise:
Bei geschlossenem Absperrventil 37 fließt unter selbsttätiger Öffnung des Ventils 32 vorher eingebrachtes
Schüttgut unter der Wirkung der Schwerkraft in den Einspeisbehälter 9, wo es sich anhäuft. Sobald eine genügend
große Menge an Schüttgut im Einspeisbehälter 9 angesammelt ist, wird das Ventil 37 rasch geöffnet. Das aus der
Druckleitung 4 einströmende Druckwasser klappt das Ventil 32 in Schließstellung und schwemmt das im Behälter 9
befindliche Schüttgut in das Förderrohr 17 und durch dieses hindurch zur Ablagerungsstelle. Nach Entleerung des
Einspeisbehälters 9 von Schüttgut wird das Absperrventil
37 wieder geschlossen, so daß neues Material aus dem Sammelbehälter 11 in den Einspeisbehälter 9 nachströmen kann.
Es wurde gefunden, daß dieses Nachströmen durch das durch
das Rohr 17 hindurch abströmende Schüttgut-Druckwasser-
Gemisch, welches bei geschlossenem Absperrventil 37 im
Einspeisbehälter 9 einen Unterdruck erzeugt, erheblich
unterstützt wird.

Der wesentliche Vorteil der beschriebenen Vorrichtungen besteht darin, daß das abzufördernde Schüttgut nicht durch
die Druckwasserpumpe 1 strömt, sondern in das Förderrohr
17 über den Einspeisbehälter 16 eingeschleust wird. Hierdurch können Verschleiß und Leistung der Pumpe 1 erheblich abgesenkt werden. Es wurde gefunden, daß die Leistung
der Pumpe 1 bei gleicher Schüttgutfördermenge pro Zeiteinheit lediglich 1/3 bis 1/2 einer üblichen "Panzerpumpe" betragen muß. Dabei kann die Förderung des Schüttgutes durch das Rohr 17 über eine Strecke von über 1000 m
erfolgen. Außerdem kann ein Höhenunterschied von etwa 25 m
überwunden werden. Die Leistung der Pumpe 1 kann etwa 250 kW oder weniger betragen.

Bei der in Fig. 2 dargestellten Ausführungsform (Tandem-Anlage) sind zwei Einspeisbehälter 9 und 9a vorgesehen. Grundsätzlich ist es möglich, die Zahl dieser in den Einlaufbehälter 16 mündenden Behälter auf mehr als zwei solcher Behälter zu erhöhen, wobei das Absperrventil 7 entsprechend als Mehr-Wegeventil ausgebildet werden muß. Die Abförderung des Schüttgutes erfolgt dann jeweils aus einem Einspeisbehälter,während die anderen Einspeisbehälter gleichzeitig mit Schüttgut befüllt werden.

In aller Regel werden die beschriebenen und dargestellten Vorrichtungen einem an einem See oder Fluß arbeitenden Saug- oder Druckbagger zugeordnet. Sie fördern dabei ein Schüttgut-Wasser-Gemisch. Grundsätzlich können mit den beschriebenen Vorrichtungen jedoch auch trockene Schüttgüter gefördert werden. Das Druckwasser kann dabei erwünschtenfalls auch durch ein gasförmiges Druckmedium ersetzt werden.

Bei der Ausführungsform nach Fig. 3 kann die Pumpe 1 auch abgeschaltet werden, solange das Ventil 37 in Schließstellung ist.

Wenn die Ventile 12 und 14 in der schematisch dargestellten Weise einen zwischen der Schließ- und Offenstellung hin- und herbewegbaren Ventilkörper aufweisen, empfiehlt es sich, diesem Ventil ein zum Beispiel in jenem Körper angeordnetes Schnellentlüfterventil zuzuordnen, um nach Schließen des Absperrventils 7 den dann im Einspeisbehälter 9, 9a herrschenden Druck rasch abbauen zu können. Solche Schnellentlüfterventile können verhältnismäßig klein ausgebildet werden und entspannen den herrschenden Druck
in sehr kurzer Zeit, so daß die Betätigung der Ventile 12,
14, insbesondere das Öffnen, erleichtert ist.

Die Absperrventile 12, 12a, 14, 14a können auch als
Quetschventile ausgebildet werden. In diesem Falle ist
eine besondere Schnellentlüftung nicht erforderlich. Bei
einem solchen Quetschventil ist ein rohrförmiger Ventildurchgang mit einer elastischen Haut aus Gummi oder Kunststoff ausgekleidet. Zwischen Haut und Innenwand des
Durchganges kann ein Druckmedium, zum Beispiel Druckwasser eingefüllt werden, wodurch sich die Haut so weit nach
innen einbeult, bis der Durchgang verschlossen ist.

A 44 972 m
m - 168
17.12.1981


Patentansprüche :


1. Vorrichtung zur Abförderung von Schüttgut in einem
   Förderrohr mittels eines von einer Druckquelle angelieferten Druckmediums,  g e k e n n z e i c h -
   n e t  durch folgende Merkmale:
   a) ein Sammelbehälter (11) für das zu fördernde
      Schüttgut;
   b) ein dem Sammelbehälter (11) nachgeschalteter,
      mit dem Förderrohr (17) verbundener Einspeisbehälter (9);
   c) ein zwischen Sammel- und Einspeisbehälter (11, 9)
      angeordnetes Absperrventil (12, 12a, 32);
   d) eine in den Einspeisbehälter (9) mündende, mit
      einer Druckquelle (1) verbundene Druckleitung (4);
   e) ein Absperrventil (7, 37) in der Druckleitung (4)
      zwischen Druckquelle (1) und Einspeisbehälter (9).


2. Vorrichtung nach Anspruch 1, dadurch gekennzeichnet,
   daß Sammelbehälter (11) und/oder Einspeisbehälter (9)
   mit einer Überlaufleitung (13, 33) versehen sind.


3. Vorrichtung nach Anspruch 1, dadurch gekennzeichnet,
   daß zwischen Überlaufleitung (13) und Einspeisbehälter (9) ein Absperrventil (14) angeordnet ist.


4. Vorrichtung nach Anspruch 1, 2 oder 3, dadurch gekennzeichnet, daß der Einspeisbehälter (9) unter Zwischenschaltung einer Rückschlagklappe (15) mit einem an das Förderrohr (17) angeschlossenen Einlaufbehälter (16) verbunden ist, in den zusätzlich eine von der Druckquelle (1) herkommende Bypaßleitung (10) mündet, und daß die Druckleitung (4) der Druckquelle (1) über ein als Mehrwegeventil ausgebildetes Absperrventil (7) wahlweise mit dem Einspeisbehälter (9) und der Bypaßleitung (10) verbindbar ist.

5. Vorrichtung nach Anspruch 1, 2 oder 3, dadurch gekennzeichnet, daß wenigstens zwei, jeweils mit vorgeschaltetem Sammelbehälter (11, 11a) und Absperrventil (12, 12a, 14, 14a) versehene Einspeisbehälter (9, 9a) vorgesehen sind, die gemeinsam unter Zwischenschaltung von Rückschlagklappen (15, 15a) in einen mit dem Förderrohr (17) verbundenen Einlaufbehälter (16) münden, und daß die Druckleitung (4) durch ein als Mehrwegeventil ausgebildetes Absperrventil (7) abwechselnd mit dem einen oder anderen Einspeisbehälter (9 bzw. 9a) verbindbar ist.

6. Vorrichtung nach Anspruch 4 oder 5, dadurch gekennzeichnet, daß die zwischen Einspeisbehälter (9, 9a) und Überlaufleitung (13) sowie zwischen Einlaufbehälter (9, 9a) und Sammelbehälter (11, 11a) vorgesehenen Absperrventile eine Schnellentlüftung aufweisen.

7. Vorrichtung nach einem der Ansprüche 1 bis 5, dadurch gekennzeichnet, daß die Absperrventile (12, 12a, 14, 14a, 32) als Quetschventile ausgebildet sind.

8. Vorrichtung nach einem der voranstehenden Ansprüche, dadurch gekennzeichnet, daß die Druckquelle (1) eine Druckwasserpumpe ist.

Herr Ludwig Lorenz Schnell, Wacholderstrasse 5, 7085 Bopfingen-Aufhausen

HOFGER STELLRECHT & PARTNER

Fig. 1

0084139

0084139

Fig. 2

## Fig. 3

0084139